# EUROPEAN PATENT APPLICATION

(11) **EP 4 772 374 A1**
(43) Date of publication of application: **08.07.2026**
(21) Application number: 25224853.9
(22) Date of filing: 18.12.2025
(51) Int. Cl.: B60K 6/36, B60K 6/40, B60K 6/46, B60W 10/06, B60W 10/08, B60W 10/26, B60W 10/30, B60W 20/10, B60W 20/11, B60W 20/13, B60W 30/188, F04C 14/00, F16H 3/02, B60K 6/485, B60W 10/113

(54) **HYBRID POWER SYSTEM, CONTROL METHOD, COMPUTER SYSTEM, PROGRAM PRODUCT, AND VEHICLE**

(30) Priority: 31.12.2024 CN 202411979784
(71) Applicant: Volvo Construction Equipment AB, 631 85 Eskilstuna (SE)
(72) Inventor: Yin, Zhen, Jinan, 250000 (CN); Wang, Daniel, Ji'nan, 250102 (CN); Li, David, Ji'nan, 250102 (CN); Kevin, Kevin, Ji'nan, 250000 (CN)
(74) Representative: Valea AB

(57) **Abstract**

Disclosed are a hybrid power system, a control method, a computer system, a program product, and a vehicle. The hybrid power system includes: an engine (1), a motor generator (2), a gearbox (3), a variable displacement hydraulic pump (4), and a battery (5) electrically connected to the motor generator (2), where the gearbox (3) includes a first transmission shaft (6), a second transmission shaft (7), a first gear (8) disposed on the first transmission shaft (6), and a second gear (9) disposed on the second transmission shaft (7), where the first gear (8) is coupled to the second gear (9); a rotation shaft of the motor generator (2) is coupled to one end of the second transmission shaft (7); and the engine (1) is connected to the variable displacement hydraulic pump (4) via the first transmission shaft (6) through 1:1 transmission. The present disclosure can simplify the structure and control of the hybrid power system, improve fuel economy, and reduce costs.

## Description

### TECHNICAL FIELD

The present disclosure relates generally to vehicles. In particular, it relates to a hybrid power system, a control method, a computer system, a computer program product, and a vehicle. The present disclosure is applicable to heavy-duty vehicles, such as construction machinery and other engineering machinery, as well as other types of vehicles. Although the present disclosure may be described with reference to a specific vehicle, the present disclosure is not limited to any specific vehicle.

### BACKGROUND

When a vehicle or engineering machine equipped with a hydraulic system is in operation, due to changes in hydraulic load flow and pressure, the output torque of the engine fluctuates significantly, and the engine often operates in low-efficiency ranges, resulting in increased fuel consumption and elevated carbon emissions, and causing a large amount of energy waste. Therefore, considering the efficient application of the engine, the current mainstream solutions for hybrid power systems in engineering machinery still follow those used in passenger vehicle systems, namely, two mainstream hybrid power systems: (1) a series hybrid power system, i.e., a range-extended solution; and (2) a parallel hybrid power system, typically, the dedicated hybrid transmission (DHT) solution. However, existing series hybrid power systems and parallel hybrid power systems generally suffer from problems such as numerous components, complex structures, high costs, and complex control.

Therefore, there is a need to design a new hybrid power system to simplify the structure and control of the hybrid power system, improve fuel economy, and reduce costs.

### SUMMARY OF THE INVENTION

To solve one or more of the aforementioned and other problems, the present disclosure proposes a hybrid power system, a hybrid power system control method, a computer system, a computer program product, and a vehicle, so as to simplify the structure and control of the hybrid power system, improve fuel economy, and reduce costs.

According to a first aspect of the present disclosure, a hybrid power system is provided, including: an engine, a motor generator, a gearbox, a variable displacement hydraulic pump, and a battery electrically connected to the motor generator, where the gearbox includes a first transmission shaft, a second transmission shaft, a first gear disposed on the first transmission shaft, and a second gear disposed on the second transmission shaft, where the first gear is coupled to the second gear; a rotation shaft of the motor generator is coupled to one end of the second transmission shaft; and the engine is connected to the variable displacement hydraulic pump via the first transmission shaft through 1:1 transmission. The first aspect of the present disclosure may be intended to provide a simplified hybrid power system structure. By way of example and not limitation, a technical advantage of the present disclosure may include simplifying the structure of a hybrid power system to reduce the number of components, thereby correspondingly simplifying the control of the hybrid power system and reducing costs.

Optionally, in some examples, the engine being connected to the variable displacement hydraulic pump via the first transmission shaft through 1:1 transmission may include: the engine being coupled to one end of the first transmission shaft, and the variable displacement hydraulic pump being coupled to the other end of the first transmission shaft. By way of example and not limitation, a technical advantage of the present disclosure may include coupling the engine to the variable displacement hydraulic pump via a simplified transmission path, thereby improving the transmission efficiency, and simplifying rotational speed control of the engine.

Optionally, in some examples, the engine being connected to the variable displacement hydraulic pump via the first transmission shaft through 1:1 transmission may include: the engine being directly connected to one end of the first transmission shaft, and the variable displacement hydraulic pump being directly connected to the other end of the first transmission shaft. By way of example and not limitation, a technical advantage of the present disclosure may include directly connecting the engine to the variable displacement hydraulic pump, thereby significantly improving the transmission efficiency and reducing efficiency loss in engine drive.

Optionally, in some examples, the gearbox may further include a third transmission shaft and a third gear disposed on the third transmission shaft, where the first gear is coupled to the second gear via the third gear, and the third transmission shaft is coupled to the variable displacement hydraulic pump. By way of example and not limitation, a technical advantage of the present disclosure may include improving the power transmission efficiency of the engine.

Optionally, in some examples, the engine being connected to the variable displacement hydraulic pump via the first transmission shaft through 1:1 transmission may include: the engine being connected to the variable displacement hydraulic pump via the first transmission shaft, the first gear, the third gear, and the third transmission shaft through 1:1 transmission. By way of example and not limitation, a technical advantage of the present disclosure may include directly connecting the engine to the hydraulic pump via transmission shafts, which reduces efficiency loss in engine drive, while eliminating the clutch and complex multi-speed settings in the transmission, thereby significantly improving the transmission efficiency.

Optionally, in some examples, the first gear is coupled to the second gear via one or more intermediate gears. By way of example and not limitation, a technical advantage of the present disclosure may include using a simplified gearbox structure instead of a complex dedicated hybrid transmission for transmission, which improves the transmission efficiency, while also retaining the structural flexibility, for example, allowing the addition of intermediate transmission members to meet design requirements

Optionally, in some examples, the hybrid power system may be configured such that a sum of an output torque of the engine and an output torque of the motor generator that results from gear-ratio conversion by the second gear is equal to a demand torque of the variable displacement hydraulic pump. By way of example and not limitation, a technical advantage of the present disclosure may include improving the applicability of the motor generator in the hybrid power system, for example, by enabling adaptation of the rotational speeds of the engine and the motor generator through different gear ratios, thereby ensuring the applicability of widely used high-speed motor generators in the engineering machinery industry.

Optionally, in some examples, the hybrid power system may be configured such that when the output torque of the engine is less than the demand torque of the variable displacement hydraulic pump, the motor generator operates as a motor and an output torque thereof is a difference between the demand torque of the variable displacement hydraulic pump and the output torque of the engine. By way of example and not limitation, a technical advantage of the present disclosure may include simplifying the requirement of the hybrid power system for independent generators and motors, and through mode switching of the same motor generator between power generation and driving, the power demand of the hydraulic load is satisfied while maintaining high-efficiency operation of the engine, thereby significantly simplifying the structural complexity and reducing costs.

Optionally, in some examples, the hybrid power system is configured such that when the output torque of the engine is greater than the demand torque of the variable displacement hydraulic pump, the motor generator operates as a generator and generates electricity under drive by the engine to charge the battery. By way of example and not limitation, a technical advantage of the present disclosure may include maintaining the engine at the demand rotational speed of the variable displacement hydraulic pump, while performing energy recovery via the motor generator and the battery when the engine outputs excess torque.

Optionally, in some examples, the hybrid power system may be configured to operate in at least one of the following drive modes: a dual drive mode, where the engine outputs power to the variable displacement hydraulic pump via the first transmission shaft; and the motor generator operates as a motor, discharges the battery, and outputs power to the variable displacement hydraulic pump via the second transmission shaft; a regenerative drive mode, where the engine outputs power to the variable displacement hydraulic pump via the first transmission shaft and the engine outputs power to the motor generator via the first transmission shaft, the first gear, the second gear, and the second transmission shaft, so as to cause the motor generator to operate as a generator to charge the battery; and an engine drive mode, where the engine outputs power to the variable displacement hydraulic pump via the first transmission shaft; and the motor generator stops outputting power. By way of example and not limitation, a technical advantage of the present disclosure may include ensuring, through reasonable settings of the drive mode of the motor generator, that the engine can operate stably in the economical range for extended periods, thereby significantly improving the vehicle fuel economy, and achieving notable energy-saving and emission-reduction effects.

According to a second aspect of the present disclosure, a method for controlling the hybrid power system according to the present disclosure is provided, the method including: acquiring a demand rotational speed of the variable displacement hydraulic pump as a target rotational speed of the engine; calculating an optimal efficiency torque of the engine at the demand rotational speed as a target torque of the engine; acquiring a demand torque of the variable displacement hydraulic pump; and controlling a target torque of the motor generator such that a sum of the target torque of the engine and the target torque of the motor generator is equal to the demand torque of the variable displacement hydraulic pump. The second aspect of the present disclosure may be intended to provide a simplified and efficient control strategy for the hybrid power system. By way of example and not limitation, a technical advantage of the present disclosure may include enabling the engine to satisfy the rotational speed demand of the variable displacement hydraulic pump, while allowing the engine and the motor generator to satisfy the torque demand of the variable displacement hydraulic pump, thereby enabling control of both the engine and the motor generator in a significantly simplified manner to achieve the rotational speed and torque objectives of the hydraulic system.

Optionally, in some examples, the step of controlling the target torque of the motor generator may include: determining whether the target torque of the engine is greater than the demand torque of the variable displacement hydraulic pump; in response to the target torque of the engine being greater than the demand torque of the variable displacement hydraulic pump, controlling the engine to output power to the variable displacement hydraulic pump via the first transmission shaft, and output power to the motor generator via the first transmission shaft, the first gear, the second gear, and the second transmission shaft, so as to cause the motor generator to operate as a generator to charge the battery; and in response to the target torque of the engine being less than the demand torque of the variable displacement hydraulic pump, controlling the engine to output power to the variable displacement hydraulic pump via the first transmission shaft, and controlling the motor generator to operate as a motor to output power to the variable displacement hydraulic pump via the second transmission shaft. By way of example and not limitation, a technical advantage of the present disclosure may include improving the vehicle fuel economy and the transmission efficiency through both a simplified control strategy and a simplified hybrid power system structure.

Optionally, in some examples, controlling the motor generator to operate as a motor to output power to the variable displacement hydraulic pump via the second transmission shaft may include: determining whether a state of charge (SOC) of the battery is not lower than a first threshold; in response to the SOC of the battery being not lower than the first threshold, controlling the motor generator to output power to the variable displacement hydraulic pump via the second transmission shaft; and in response to the SOC of the battery being lower than the first threshold, controlling the engine to output power to the variable displacement hydraulic pump via the first transmission shaft such that an output torque of the engine is equal to the demand torque of the variable displacement hydraulic pump; and controlling the motor generator to stop outputting power. By way of example and not limitation, a technical advantage of the present disclosure may include avoiding over-discharging of the battery and prolonging the battery service life.

Optionally, in some examples, controlling the motor generator to operate as a generator to charge the battery may include: determining whether a state of charge (SOC) of the battery is higher than a second threshold; in response to the SOC of the battery being higher than the second threshold, controlling the motor generator to stop charging the battery; and in response to the SOC of the battery being lower than the second threshold, controlling the engine to output power to the motor generator via the first transmission shaft, the first gear, the second gear, and the second transmission shaft, so as to cause the motor generator to operate as a generator to charge the battery. By way of example and not limitation, a technical advantage of the present disclosure may include avoiding over-charging of the battery, thereby prolonging the battery service life.

Optionally, in some examples, the method may further include: monitoring whether a positive deviation between an output rotational speed of the engine and the demand rotational speed of the variable displacement hydraulic pump is greater than a third threshold; in response to the positive deviation between the output rotational speed of the engine and the demand rotational speed of the variable displacement hydraulic pump being greater than the third threshold and the target torque of the engine being less than the demand torque of the variable displacement hydraulic pump, decreasing a positive output torque of the motor generator to compensate for the positive deviation; and in response to the positive deviation between the output rotational speed of the engine and the demand rotational speed of the variable displacement hydraulic pump being greater than the third threshold and the target torque of the engine being greater than the demand torque of the variable displacement hydraulic pump, increasing a negative output torque of the motor generator to compensate for the positive deviation.

Optionally, in some examples, the method may further include: monitoring whether an absolute value of a negative deviation between an output rotational speed of the engine and the demand rotational speed of the variable displacement hydraulic pump is greater than a fourth threshold; in response to the absolute value of the negative deviation between the output rotational speed of the engine and the demand rotational speed of the variable displacement hydraulic pump being greater than the fourth threshold and the target torque of the engine being less than the demand torque of the variable displacement hydraulic pump, increasing a positive output torque of the motor generator to compensate for the negative deviation; and in response to the absolute value of the negative deviation between the output rotational speed of the engine and the demand rotational speed of the variable displacement hydraulic pump being greater than the fourth threshold and the target torque of the engine being greater than the demand torque of the variable displacement hydraulic pump, decreasing a negative output torque of the motor generator to compensate for the negative deviation. By way of example and not limitation, a technical advantage of the present disclosure may include compensating for the hysteresis of control, thereby more accurately providing the required output torque for the hydraulic pump.

Optionally, in some examples, the method may further include: monitoring whether a positive deviation between an output rotational speed of the engine and the demand rotational speed of the variable displacement hydraulic pump is greater than a fifth threshold; and in response to the positive deviation between the output rotational speed of the engine and the demand rotational speed of the variable displacement hydraulic pump being greater than the fifth threshold, controlling the motor generator to reduce a rotational speed thereof or to stop operating. By way of example and not limitation, a technical advantage of the present disclosure may include, when the engine rotational speed is abnormal, preventing the generation of excessively high torque output and protecting system safety.

According to a third aspect of the present disclosure, a computer system is provided, including: a processing circuit; and a memory having computer-executable instructions stored thereon, where the computer-executable instructions, when executed by the processing circuit, implement any one of the methods according to the present disclosure.

According to a fourth aspect of the present disclosure, a computer program product is provided, including computer-executable instructions, where the computer-executable instructions, when executed by a processing circuit, implement any one of the methods according to the present disclosure.

According to a fifth aspect of the present disclosure, a vehicle is provided, including the hybrid power system according to the present disclosure.

Those skilled in the art should understand that the disclosed aspects, examples (including any preferred examples) and/or the appended claims may be suitably combined with each other. Additional features and advantages are disclosed in the following description, the claims, and the drawings, and may be partly apparent to those skilled in the art from the present disclosure, or recognized through practicing the present disclosure described herein.

Also disclosed herein are computer systems, control units, code modules, computer-implemented methods, computer-readable media, and computer program products related to the aforementioned technical advantages.

### DESCRIPTION OF DRAWINGS

FIG. 1 is a schematic block diagram of a hybrid power system according to an example of the present disclosure;
FIG. 2 is a schematic block diagram of a hybrid power system according to another example of the present disclosure;
FIG. 3 is a schematic flowchart of a method for controlling a hybrid power system according to an example of the present disclosure;
FIG. 4 is an exemplary engine torque-rotational speed diagram according to an example of the present disclosure;
FIG. 5 is a control signal flow diagram of a vehicle containing a hybrid power system according to an example of the present disclosure; and
FIG. 6 is a schematic block diagram of a computer system for implementing examples disclosed herein in an example.

### DETAILED DESCRIPTION

The detailed description set forth below provides information and examples regarding the technology disclosed herein in sufficient detail to enable those skilled in the art to practice the present disclosure.

The terminology used herein is for the purpose of describing particular aspects only and is not intended to be limiting of the present disclosure. As used herein, the term "and/or" includes any and all combinations of one or more of the associated listed items. It should be further understood that the terms "comprising," "including," "containing," and/or "encompassing," when used herein, specify the presence of stated features, integers, actions, steps, operations, elements, and/or components, but do not preclude the presence or addition of one or more other features, integers, actions, steps, operations, elements, components, and/or groups thereof.

It should be understood that although the terms "first," "second," etc., may be used herein to describe various elements, these elements should not be limited by these terms. These terms are only used to distinguish one element from another. For example, a first element could be termed a second element, and similarly, a second element could be termed a first element, without departing from the scope of the present disclosure.

Words expressing relative relationships, such as "below" or "above" or "upper" or "lower" or "horizontal" or "vertical," etc., may be used herein to describe a relationship of one element to another element as illustrated in the figures. It should be understood that these terms and those mentioned above are intended to encompass different orientations of the device in addition to the orientation depicted in the figures. It should be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art, and should not be interpreted in an idealized or overly formal sense unless expressly so defined herein.

Examples of the present disclosure will be described in more detail below with reference to the accompanying drawings.

In existing series hybrid power systems, the engine is solely connected to a generator to operate as a power generation unit, and the hydraulic load is entirely driven by a motor. This results in a problem of an overly long power transmission path, where engine power undergoes multiple losses before it can drive the hydraulic load, leading to low engine utilization efficiency. Furthermore, this system requires high-capacity generator and motor power units, as well as a high-power battery system, which significantly increases the costs.

In existing parallel hybrid power systems, their components include an engine, a generator, a motor, and a transmission equipped with a clutch, leading to problems such as a large number of components, relatively high complexity of structure and control, resulting in high development difficulty and costs.

The inventors creatively propose a structurally simplified hybrid power system and a corresponding control method, which significantly simplify the structure and control of the hybrid power system, improve fuel economy, and reduce costs.

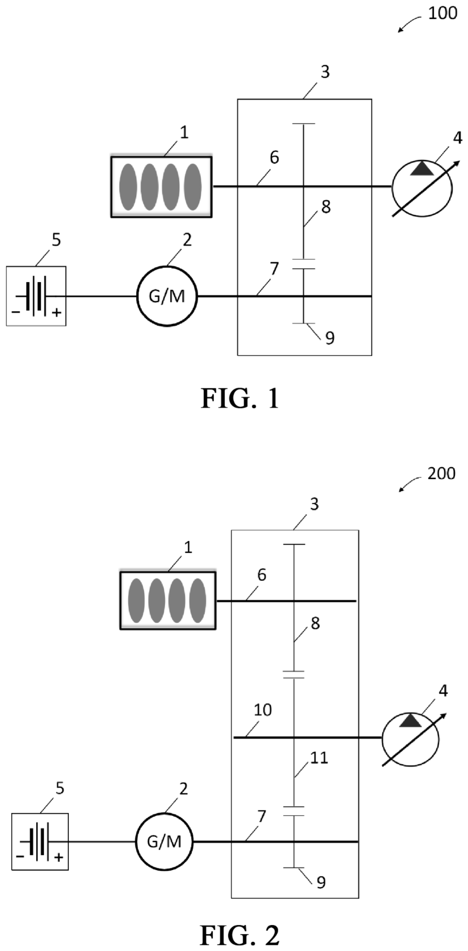

FIG. 1 is a schematic block diagram of a hybrid power system 100 according to an example of the present disclosure.

As shown in FIG. 1, the hybrid power system 100 may include an engine 1, a motor generator (MG) 2, a gearbox 3, a variable displacement hydraulic pump 4, and a battery 5 electrically connected to the motor generator 2. The motor generator 2 is switchable between a power generation mode and a drive mode, for charging the battery 5, or being powered by the battery 5 to operate as a motor. In some examples, the gearbox 3 may include a first transmission shaft 6, a second transmission shaft 7, a first gear 8 disposed on the first transmission shaft 6, and a second gear 9 disposed on the second transmission shaft 7, where the first gear 8 is coupled to the second gear 9. It should be understood that the first gear 8 may be coupled to the second gear 9 directly without an intermediate element, or may be coupled to the second gear 9 indirectly via one or more transmission members. By way of example and not limitation, a transmission member may include an intermediate gear, or the like. A rotation shaft of the motor generator 2 is coupled to one end of the second transmission shaft 7, thereby enabling outputting of power via the second transmission shaft 7 or receiving of power from the engine 1 via the second transmission shaft 7. In some examples, the engine 1 is connected to the variable displacement hydraulic pump 4 via the first transmission shaft 6 through 1:1 transmission. In this way, the rotational speed of the engine 1 is the same as that of the variable displacement hydraulic pump 4. Thus, with the hybrid power system of the present disclosure, the demand rotational speed of the variable displacement hydraulic pump 4 can be met simply by the engine 1.

In some examples, the engine 1 may be directly or indirectly coupled to one end of the first transmission shaft 6, and the variable displacement hydraulic pump 4 may be directly or indirectly coupled to the other end of the first transmission shaft 6. Those skilled in the art should understand that, in examples of indirect coupling, the coupling path may include elements not shown in the present disclosure, for example, transmission members, clutches, brakes, or the like, while still maintaining the 1:1 transmission connection between the engine 1 and the variable displacement hydraulic pump 4.

In some examples, the engine 1 may be directly connected to one end of the first transmission shaft 6, and the variable displacement hydraulic pump 4 may be directly connected to the other end of the first transmission shaft 6. In this way, the engine and the hydraulic pump are directly connected via the first transmission shaft, which significantly reduces efficiency loss in engine drive, while eliminating the clutch and complex multi-speed settings in the transmission, thereby greatly improving the transmission efficiency.

FIG. 2 is a schematic block diagram of a hybrid power system 200 according to another example of the present disclosure. In FIG. 2, components denoted by the same reference numerals may be identical to those shown in FIG. 1, and are not repeatedly described herein. A main difference between the example shown in FIG. 2 and the example shown in FIG. 1 is that the gearbox 3 may further include a third transmission shaft 10 and a third gear 11 disposed on the third transmission shaft 10. Furthermore, the first gear 8 may be coupled to the second gear 9 via the third gear 11, and the third transmission shaft 10 is coupled to the variable displacement hydraulic pump 4. In some examples, the engine 1 may be connected to the variable displacement hydraulic pump 4 via the first transmission shaft 6, the first gear 8, the third gear 11, and the third transmission shaft 10 through 1:1 transmission. It should be understood that the transmission path described in the present disclosure may optionally include other components, such as transmission members, clutches, brakes, and so on. Based on the present disclosure, those skilled in the art can achieve a balance between two aspects in implementing the hybrid power system of the present disclosure without departing from the scope of the present disclosure: on one hand, minimizing the number of components contained in the transmission path to improve the transmission efficiency, and on the other hand, meeting the functional requirements of the practical application of the hybrid power system.

As a non-limiting example, the gearbox 3 in the hybrid power system 100 or 200 may be implemented as a parallel-shaft gearbox, but the implementation of the present disclosure is not limited thereto, and other equivalent gearboxes may be adopted without departing from the scope of the present disclosure. In some non-limiting examples, the variable displacement hydraulic pump 4 may be an electronically controlled variable displacement pump, which maintains a fixed rotational speed during operation, with its hydraulic pump displacement controlled by a solenoid valve and its pressure following changes in the hydraulic load.

In some examples, the hybrid power system 100 or 200 may be configured such that a sum of an output torque of the engine 1 and an output torque of the motor generator 2 that results from gear-ratio conversion by the second gear 9 is equal to a demand torque of the variable displacement hydraulic pump 4. In this way, a demand rotational speed of the variable displacement hydraulic pump 4 is satisfied by the engine 1, while the demand torque of the variable displacement hydraulic pump 4 is satisfied by both the engine 1 and the motor generator 2, thereby enabling relatively independent control of the rotational speed and the torque in the hybrid power system of the present disclosure, which helps to simultaneously satisfy the rotational speed and torque requirements of the hydraulic system in a simplified control manner.

In some examples, the first gear 8 and the second gear 9 having different gear ratios may be adopted to adjust a rotational speed correspondence relationship between the engine 1 and the motor generator 2. Furthermore, in some examples, the number of motor generators may be changed by replacing engines or motor generators having different power, or by modifying the transmission shaft for the motor generator on the gearbox. In this way, the solution of the present disclosure may be applicable to engineering machinery of different tonnages and different power demands. For example, it can provide an efficient power system solution for heavy-duty and ultra-heavy-duty engineering machinery.

In some examples, the hybrid power system 100 or 200 may be configured such that when the output torque of the engine 1 is less than the demand torque of the variable displacement hydraulic pump 4, the motor generator 2 operates as a motor and an output torque thereof is equal to a difference between the demand torque of the variable displacement hydraulic pump 4 and the output torque of the engine 1. It should be understood that, in these examples, when the motor generator 2 operates as a motor, it can provide a positive output torque to the variable displacement hydraulic pump 4.

In some examples, the hybrid power system 100 or 200 may be configured such that when the output torque of the engine 1 is greater than the demand torque of the variable displacement hydraulic pump 4, the motor generator 2 operates as a generator and generates electricity under drive by the engine 1 to charge the battery 5. It should be understood that, in these examples, when the motor generator 2 operates as a generator, it can provide a negative output torque, thereby recovering excess torque output from the engine 1 for charging the battery 5.

In this way, the engine 1 can stably operate at the demand rotational speed of the variable displacement hydraulic pump 4, and adaptively adjust the output torque of the motor generator 2 according to the demand torque of the variable displacement hydraulic pump 4.

In some examples, the hybrid power system 100 or 200 may be configured to operate in at least one of the following drive modes:
- a dual drive mode, where the engine 1 outputs power to the variable displacement hydraulic pump 4 via the first transmission shaft 6; and the motor generator 2 operates as a motor, discharges the battery 5, and outputs power to the variable displacement hydraulic pump 4 via the second transmission shaft 7;
- a regenerative drive mode, where the engine 1 outputs power to the variable displacement hydraulic pump 4 via the first transmission shaft 6 and the engine 1 outputs power to the motor generator 2 via the first transmission shaft 6, the first gear 8, the second gear 9, and the second transmission shaft 7, so as to cause the motor generator 2 to operate as a generator to charge the battery 5; and
- an engine drive mode, where the engine 1 outputs power to the variable displacement hydraulic pump 4 via the first transmission shaft 6; and the motor generator 2 stops outputting power.

It should be understood that the above drive modes are only examples of the operational modes of the hybrid power system described in the present disclosure and are not limiting. The hybrid power system according to the present disclosure may operate according to more, fewer, or different drive modes without departing from the scope of the present disclosure.

Furthermore, when the hybrid power system according to the present disclosure operates in different drive modes, its transmission path is significantly simplified compared to existing hybrid power systems, thereby enabling higher transmission efficiency. It should also be understood that the hybrid power system of the present disclosure may be implemented with transmission paths different from those shown in the present disclosure, or may include more and/or fewer elements in the transmission paths, without departing from the scope of the present disclosure.

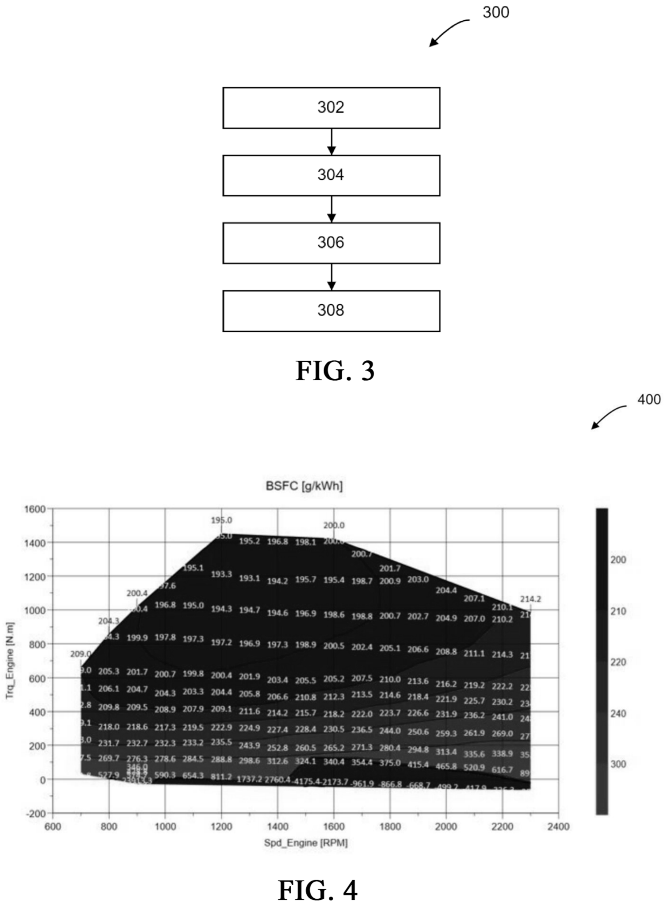

FIG. 3 is a schematic flowchart of a method 300 for controlling a hybrid power system according to an example of the present disclosure. Step 302: acquiring a demand rotational speed of the variable displacement hydraulic pump 4 as a target rotational speed of the engine 1. In some examples, the demand rotational speed of the variable displacement hydraulic pump 4 may be obtained according to a hydraulic request issued by a driver of the vehicle.

Step 304: calculating an optimal efficiency torque of the engine 1 at the demand rotational speed of the variable displacement hydraulic pump 4 as a target torque of the engine 1.

Step 306: acquiring a demand torque of the variable displacement hydraulic pump 4.

Step 308: controlling a target torque of the motor generator 2 such that a sum of the target torque of the engine 1 and the target torque of the motor generator 2 is equal to the demand torque of the variable displacement hydraulic pump 4.

In this way, through the control method of the present disclosure, the engine can be controlled individually to satisfy the rotational speed demand of the hydraulic system, and the target torques of both the engine and the motor generator can be controlled to satisfy the torque demand of the hydraulic system. Even if the demand rotational speed of the variable displacement hydraulic pump changes, the control method according to the present disclosure can also adjust the engine in a timely manner to operate according to the demand rotational speed of the hydraulic system and the optimal efficiency torque.

Furthermore, those skilled in the art should understand that the demand torque of the variable displacement hydraulic pump 4 may come from a hydraulic system and/or a control unit of the vehicle. In some examples, when there is a need to charge the battery 5, the demand torque of the variable displacement hydraulic pump 4 can be adjusted, for example by a driver, to be lower than the target torque of the engine, thereby manually initiating the regenerative drive mode.

Reference is made to FIG. 4 below to further explain the calculation of the optimal efficiency torque of the engine 1 at the demand rotational speed of the variable displacement hydraulic pump 4 in step 304. FIG. 4 is an exemplary engine torque-rotational speed diagram 400 according to an example of the present disclosure, where the horizontal axis represents engine rotational speed in revolutions per minute (RPM), and the vertical axis represents engine output torque, and the numerical values on the diagram indicate the brake specific fuel consumption (BSFC) when the engine operates at the rotational speed shown on the horizontal axis and the torque shown on the vertical axis. Those skilled in the art should understand that brake specific fuel consumption (BSFC) is an important indicator for evaluating engine fuel economy, which is used to represent the amount of fuel consumed by the engine per unit of effective work (measured by brake power), and is typically expressed in grams per kilowatt-hour (g/kW·h). In an engine torque-rotational speed diagram such as that shown in FIG. 4, BSFC curves can intuitively reflect the fuel economy of the engine under different operating conditions (different combinations of rotational speed and torque).

When the engine operates within the rotational speed and torque range corresponding to the minimum value of the BSFC curve, the fuel economy of the engine is optimal, which means that the engine consumes the least amount of fuel per unit of power output under this operating condition. For example, in FIG. 4, when the engine operates at 1600 revolutions per minute, controlling the output torque of the engine to about 1200 Newton-meters results in the minimum BSFC of the engine, which is about 195.4 g/kW·h. In other words, when the demand rotational speed of the variable displacement hydraulic pump 4 is 1600 revolutions per minute, in the solution of the present disclosure, the target rotational speed of the engine 1 is also 1600 revolutions per minute, and the corresponding optimal efficiency torque of the engine is about 1200 Newton-meters. It should be understood that the numerical values in FIG. 4 are for illustrative purposes only and not a limitation of the present disclosure.

In some examples, the motor generator may be controlled to provide a positive output torque or a negative output torque to keep the engine operating at the optimal efficiency torque, thereby improving the fuel economy. In some examples, the step of controlling the target torque of the motor generator 2 may include: first determining whether the target torque of the engine 1 is greater than the demand torque of the variable displacement hydraulic pump 4. In some examples, in response to the target torque of the engine 1 being greater than the demand torque of the variable displacement hydraulic pump 4, the engine 1 may be controlled to output power to the variable displacement hydraulic pump 4 via the first transmission shaft 6, and output power to the motor generator 2 via the first transmission shaft 6, the first gear 8, the second gear 9, and the second transmission shaft 7, so as to cause the motor generator 2 to operate as a generator to charge the battery 5. In some examples, in response to the target torque of the engine 1 being less than the demand torque of the variable displacement hydraulic pump 4, the engine 1 may be controlled to output power to the variable displacement hydraulic pump 4 via the first transmission shaft 6, and the motor generator 2 may be controlled to operate as a motor to output power to the variable displacement hydraulic pump 4 via the second transmission shaft 7. In this way, the system and method of the present disclosure, according to the dynamic changes in the hydraulic pump load, can reasonably control the power output of the motor generator, thereby rapidly responding to hydraulic power requests of the vehicle and improving the work efficiency; and furthermore, dynamically balance the output power of the engine to keep the engine always working within its high-efficiency range, thereby improving the fuel economy of the engine and reducing fuel consumption and exhaust emissions.

In some examples, during operation of the vehicle, the hydraulic pump load is jointly powered by both the engine and the motor generator. When the hydraulic load increases, the motor generator can be prioritized to output torque to supplement power, thereby discharging the battery; and when the hydraulic load decreases, the motor generator can be prioritized to provide braking torque to recover power, thereby charging the battery. When the battery loses charging and discharging capability, the power from the motor generator can be cut off, and power output is performed only through the engine.

In some examples, controlling the motor generator 2 to operate as a motor to output power to the variable displacement hydraulic pump 4 via the second transmission shaft 7 may include: determining whether a state of charge (SOC) of the battery 5 is not lower than a first threshold; in response to the SOC of the battery 5 being not lower than the first threshold, controlling the motor generator to output power to the variable displacement hydraulic pump 4 via the second transmission shaft 7; and in response to the SOC of the battery 5 being lower than the first threshold, controlling the engine 1 to output power to the variable displacement hydraulic pump 4 via the first transmission shaft 6 such that an output torque of the engine 1 is equal to the demand torque of the variable displacement hydraulic pump 4; and controlling the motor generator 2 to stop outputting power.

In some examples, controlling the motor generator 2 to operate as a generator to charge the battery 5 may include: determining whether a state of charge (SOC) of the battery 5 is higher than a second threshold; in response to the SOC of the battery 5 being higher than the second threshold, controlling the motor generator 2 to stop charging the battery 5; and in response to the SOC of the battery 5 being lower than the second threshold, controlling the engine 1 to output power to the motor generator 2 via the first transmission shaft 6, the first gear 8, the second gear 9, and the second transmission shaft 7, so as to cause the motor generator 2 to operate as a generator to charge the battery 5.

In some examples, the method may further include: monitoring whether a positive deviation between an output rotational speed of the engine 1 and the demand rotational speed of the variable displacement hydraulic pump 4 is greater than a third threshold; in response to the positive deviation between the output rotational speed of the engine 1 and the demand rotational speed of the variable displacement hydraulic pump 4 being greater than the third threshold and the target torque of the engine 1 being less than the demand torque of the variable displacement hydraulic pump 4, decreasing a positive output torque of the motor generator 2 to compensate for the positive deviation; and in response to the positive deviation between the output rotational speed of the engine 1 and the demand rotational speed of the variable displacement hydraulic pump 4 being greater than the third threshold and the target torque of the engine 1 being greater than the demand torque of the variable displacement hydraulic pump 4, increasing a negative output torque of the motor generator 2 to compensate for the positive deviation.

As a non-limiting example, in a case where the demand rotational speed of the variable displacement hydraulic pump 4 is 1000 RPM, the demand torque of the variable displacement hydraulic pump 4 is 600 N·m, and the target torque of the engine 1 is 500 N·m, the target torque of the motor generator 2 is 100 N·m. However, due to hysteresis of the control system, the actual output rotational speed of the engine 1 may have reached 1100 RPM, and accordingly the output torque of the engine 1 is 600 N·m, which has exceeded its target torque of 500 N·m. Therefore, in such a case, the solution of the present disclosure can adaptively reduce the output torque of the motor generator 2 to compensate for the hysteresis of the control system and more accurately meet the actual torque requirements of the hydraulic system.

As a non-limiting example, the output torque of the motor generator 2 may be adjusted according to the magnitude of the deviation between the output rotational speed of the engine 1 and the demand rotational speed of the variable displacement hydraulic pump 4. In some examples, if the output rotational speed of the engine 1 is within a range of the target rotational speed 1000 RPM ± 50 RPM, the output torque of the motor generator 2 may not be adjusted; if the output rotational speed of the engine 1 is within the target rotational speed 1000 RPM ± 100 RPM, the output torque of the motor generator 2 may be adjusted by ±50 N·m. However, if the difference between the output rotational speed of the engine 1 and the target rotational speed is too large, for example, beyond 1000 RPM ± 300 RPM, emergency measures may be taken, for example, disconnecting the motor generator 2, to ensure the safe operation of the hybrid power system.

In some examples, the method may further include: monitoring whether an absolute value of a negative deviation between an output rotational speed of the engine 1 and the demand rotational speed of the variable displacement hydraulic pump 4 is greater than a fourth threshold; in response to the absolute value of the negative deviation between the output rotational speed of the engine 1 and the demand rotational speed of the variable displacement hydraulic pump 4 being greater than the fourth threshold and the target torque of the engine 1 being less than the demand torque of the variable displacement hydraulic pump 4, increasing a positive output torque of the motor generator 2 to compensate for the negative deviation; and in response to the absolute value of the negative deviation between the output rotational speed of the engine 1 and the demand rotational speed of the variable displacement hydraulic pump 4 being greater than the fourth threshold and the target torque of the engine 1 being greater than the demand torque of the variable displacement hydraulic pump 4, decreasing a negative output torque of the motor generator 2 to compensate for the negative deviation.

In some examples, the method may further include: monitoring whether a positive deviation between an output rotational speed of the engine 1 and the demand rotational speed of the variable displacement hydraulic pump 4 is greater than a fifth threshold; and in response to the positive deviation between the output rotational speed of the engine 1 and the demand rotational speed of the variable displacement hydraulic pump 4 being greater than the fifth threshold, controlling the motor generator 2 to reduce a rotational speed thereof or to stop operating.

Those skilled in the art should understand that specific numerical values for the aforementioned first threshold to the fifth threshold can be determined with reference to specific vehicle configurations and control objectives based on the principles of the present disclosure.

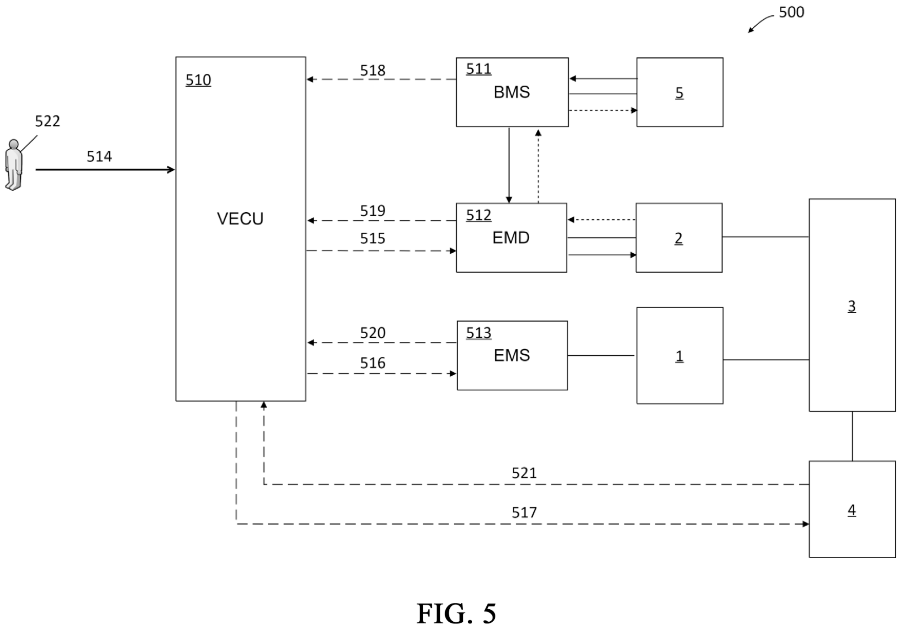

FIG. 5 is a control signal flow diagram of a vehicle 500 containing a hybrid power system according to an example of the present disclosure. As shown in FIG. 5, the vehicle 500 includes the hybrid power system according to the present disclosure, which includes an engine 1, a motor generator 2, a gearbox 3, a variable displacement hydraulic pump 4, and a battery 5. The vehicle 500 further includes a vehicle electronic control unit (VECU) 510 and other controllers, such as a battery management system (BMS) 511, an electric motor drive (EMD) controller 512, and an engine management system (EMS) 513. It should be understood that although FIG. 5 illustrates only part of the components of the vehicle 500 for illustrating the principles of the present disclosure, the vehicle 500 may further include other components, sub-systems, and controllers, such as a travel system, a brake system, a hydraulic work system, an auxiliary system, and the like.

As shown in FIG. 5, a driver 522 of the vehicle 500 may, for example, issue a demand rotational speed request 514 for the variable displacement hydraulic pump 4 to the VECU 510 via a joystick. The VECU 510 may be electrically connected to various controllers/control units or sensors and other components within the vehicle 500, receiving status information from various components of the hybrid power system and issuing control signals to control them. As a non-limiting example, as shown in FIG. 5, the VECU 510 may receive a battery SOC 518 from the BMS 511, receive a rotational speed/torque 519 of the motor generator 2 from the EMD 512, receive a rotational speed/torque 520 of the engine 1 from the EMS, and receive a hydraulic pressure 521 from the variable displacement hydraulic pump 4. Furthermore, the VECU 510 may also issue a torque request 515 to the EMD 512, issue a rotational speed request 516 to the EMS 513, and issue a hydraulic displacement control signal 517 to the variable displacement hydraulic pump, according to the solution of the present disclosure. It should be understood that FIG. 5 only illustrates one non-limiting example of the control signal flow in the vehicle 500, and the implementation of the present disclosure is not limited thereto, but may be implemented in different ways. For example, the control method of the present disclosure may be implemented centrally or distributedly by a controller, a processing circuit, or a processor other than the VECU, and the control method of the present disclosure may also be implemented using status information and control signals different from those shown.

In some examples of the present disclosure, a computer system is provided, including: a processing circuit; and a memory having computer-executable instructions stored thereon, where the computer-executable instructions, when executed by the processing circuit, implement the method according to the present disclosure.

In some examples of the present disclosure, a computer program product is provided, including computer-executable instructions, where the computer-executable instructions, when executed by a processing circuit, implement the method according to the present disclosure.

In some examples of the present disclosure, a vehicle is further provided, the vehicle including the hybrid power system according to the present disclosure. In some examples, the vehicle is a hydraulic engineering vehicle, including but not limited to an excavator, a loader, and the like.

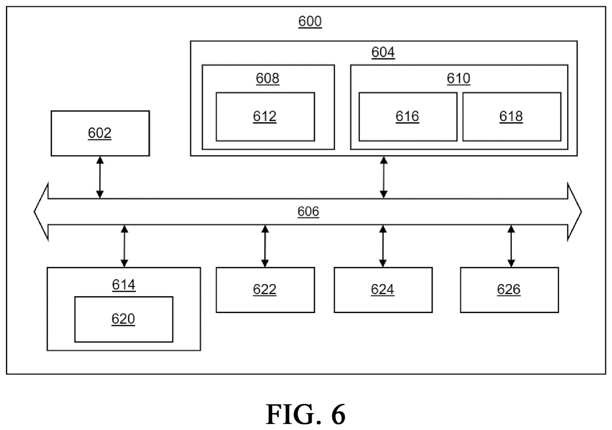

FIG. 6 is a schematic diagram of a computer system 600 for implementing examples disclosed herein. The computer system 600 is adapted to execute instructions from a computer-readable medium to perform these and/or any functions or processing described herein. The computer system 600 may be connected (e.g., networked) to other machines via a local area network (LAN), a local interconnect network (LIN), an automotive network communication protocol (e.g., FlexRay), an intranet, an extranet, or the Internet. Although only a single device is illustrated, the computer system 600 may include any collection of devices that, individually or collectively, execute a set (or multiple sets) of instructions to perform any one or more of the methods described herein. Accordingly, any reference in this specification and/or the claims to a computer system, a computing system, a computer device, a computing device, a control system, a control unit, an electronic control unit (ECU), a processor device, a processing circuit, or the like, includes a reference to one or more such devices, which individually or collectively execute a set (or multiple sets) of instructions to perform any one or more of the methods described herein. For example, a control system may include a single control unit or multiple control units, the multiple control units being connected or otherwise communicating with each other or with other devices, such that any performed functions can be distributed between the control units as needed. Furthermore, such devices may be connected or otherwise communicate with each other or with other devices via various system architectures, such as being connected or communicating directly or via a controller area network (CAN) bus, etc.

The computer system 600 may include at least one computing device or electronic device that may include firmware, hardware, and/or execute software instructions to implement the functions described herein. The computer system 600 may include a processing circuit 602 (e.g., a processing circuit including one or more processor devices or control units), a memory 604, and a system bus 606. The computer system 600 may include at least one computing device having the processing circuit 602. The system bus 606 provides an interface for system components, including, but not limited to, the memory 604 and the processing circuit 602. The processing circuit 602 may include any number of hardware components for performing data or signal processing or for executing computer code stored in the memory 604. The processing circuit 602 may include, for example, a general-purpose processor, a special-purpose processor, a digital signal processor (DSP), an application specific integrated circuit (ASIC), a field programmable gate array (FPGA), a circuit containing processing components, a set of distributed processing components, a set of distributed computers configured for processing, or other programmable logic devices, discrete gate or transistor logic, discrete hardware components, or any combination thereof designed to perform the functions described herein. The processing circuit 602 may further include computer-executable code for controlling the execution of a programmable device.

The system bus 606 may be any of several types of bus structures and may be further interconnected to a memory bus (with or without a memory controller), a peripheral bus, and/or a local bus using any of a variety of bus architectures. The memory 604 may be one or more devices which store data and/or computer code for completing and/or facilitating implementation of the methods described herein. The memory 604 may include database components, object code components, script components, or other types of information structures for supporting the various activities described herein. Any illustrated or local memory device may be utilized by the systems and methods described herein. The memory 604 may be communicatively connected (e.g., via a circuit or any other wired, wireless, or network connection) to the processing circuit 602 and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium that can be used to store desired program code or data structures in the form of machine-executable instructions and that can be accessed by a computer or other machine having the processing circuit 602. A basic input/output system (BIOS) 612 may be stored in the non-volatile memory 608 and may include basic routines that assist in transferring information between elements within the computer system 600.

The computer system 600 may further include or be coupled to a non-volatile computer-readable storage medium, such as a storage device 614, which may include, for example, an internal or external hard disk drive (HDD) (e.g., enhanced integrated drive electronics (EIDE) or serial advanced technology attachment (SATA)), a hard disk drive (HDD) for storage (e.g., EIDE or SATA), flash memory, etc. The storage device 614 and other drives associated with computer-readable media and computer-usable media may provide non-volatile storage of data, data structures, computer-executable instructions, etc.

Hard-coded or soft-coded computer code may be provided in the form of one or more modules. The one or more modules may be implemented as software and/or hard-coded in circuitry to perform all or part of the functions described herein. The modules may be stored in the storage device 614 and/or the volatile memory 610, which may include an operating system 616 and/or one or more program modules 618. All or part of the examples described herein may be implemented as a computer program 620 stored on a transient or non-transient computer-usable or computer-readable storage medium (e.g., a single medium or a plurality of media), such as the storage device 614, which includes complex programming instructions (e.g., complex computer-readable program instructions) to cause the processing circuit 602 to perform the actions described herein. Thus, the computer-readable program code of the computer program 620 may include software instructions that, when executed by the processing circuit 602, are used to implement the functions of the examples described herein. In some examples, the storage device 614 may be a computer program product (e.g., a readable storage medium) on which the computer program 620 is stored, where at least a portion of the computer program 620 can be loaded (e.g., into a processor) to implement the functions of the examples described herein when executed by the processing circuit 602. The processing circuit 602 may function as a controller or control system of the computer system 600 for implementing the functions described herein.

The computer system 600 may include an input device interface 622 which is configured to, when instructions are executed, receive input and selections communicated to the computer system 600 from, for example, a keyboard, a mouse, a touch-sensitive surface, etc. These input devices may be connected to the processing circuit 602 via the input device interface 622 coupled to the system bus 606, but may also be connected through other interfaces, such as a parallel port, an Institute of Electrical and Electronic Engineers (IEEE) 1394 serial port, a universal serial bus (USB) port, an infra-red (IR) interface, etc. The computer system 600 may include an output device interface 624 configured to forward output to, for example, a display, a video display unit (e.g., a liquid crystal display (LCD) or a cathode ray tube (CRT)). The computer system 600 may include a communication interface 626 which is suitable for communicating with a network in an appropriate manner as needed.

Some examples of the present disclosure are provided below.
Example 1: A hybrid power system, comprising: an engine 1, a motor generator 2, a gearbox 3, a variable displacement hydraulic pump 4, and a battery 5 electrically connected to the motor generator 2, wherein the gearbox 3 comprises a first transmission shaft 6, a second transmission shaft 7, a first gear 8 disposed on the first transmission shaft 6, and a second gear 9 disposed on the second transmission shaft 7, wherein the first gear 8 is coupled to the second gear 9; a rotation shaft of the motor generator 2 is coupled to one end of the second transmission shaft 7; and the engine 1 is connected to the variable displacement hydraulic pump 4 via the first transmission shaft 6 through 1:1 transmission.
Example 2: The hybrid power system according to Example 1, wherein the engine 1 being connected to the variable displacement hydraulic pump 4 via the first transmission shaft 6 through 1:1 transmission comprises: the engine 1 being coupled to one end of the first transmission shaft 6, and the variable displacement hydraulic pump 4 being coupled to the other end of the first transmission shaft 6.
Example 3: The hybrid power system according to Example 2, wherein the engine 1 being connected to the variable displacement hydraulic pump 4 via the first transmission shaft 6 through 1:1 transmission comprises: the engine 1 being directly connected to one end of the first transmission shaft 6, and the variable displacement hydraulic pump 4 being directly connected to the other end of the first transmission shaft 6.
Example 4: The hybrid power system according to Example 1, wherein the gearbox 3 further comprises a third transmission shaft 10 and a third gear 11 disposed on the third transmission shaft 10, wherein the first gear 8 is coupled to the second gear 9 via the third gear 11, and the third transmission shaft 10 is coupled to the variable displacement hydraulic pump 4.
Example 5: The hybrid power system according to Example 4, wherein the engine 1 being connected to the variable displacement hydraulic pump 4 via the first transmission shaft 6 through 1:1 transmission comprises: the engine 1 being connected to the variable displacement hydraulic pump 4 via the first transmission shaft 6, the first gear 8, the third gear 11, and the third transmission shaft 10 through 1:1 transmission.
Example 6: The hybrid power system according to Example 1, wherein the first gear 8 is coupled to the second gear 9 via one or more intermediate gears.
Example 7: The hybrid power system according to Example 1, wherein the hybrid power system is configured such that a sum of an output torque of the engine 1 and an output torque of the motor generator 2 that results from gear-ratio conversion by the second gear 9 is equal to a demand torque of the variable displacement hydraulic pump 4.
Example 8: The hybrid power system according to Example 3, wherein the hybrid power system is configured such that when the output torque of the engine 1 is less than the demand torque of the variable displacement hydraulic pump 4, the motor generator 2 operates as a motor and an output torque thereof is a difference between the demand torque of the variable displacement hydraulic pump 4 and the output torque of the engine 1.
Example 9: The hybrid power system according to Example 3, wherein the hybrid power system is configured such that when the output torque of the engine 1 is greater than the demand torque of the variable displacement hydraulic pump 4, the motor generator 2 operates as a generator and generates electricity under drive by the engine 1 to charge the battery 5.
Example 10: The hybrid power system according to Example 1, wherein the hybrid power system is configured to operate in at least one of the following drive modes: a dual drive mode, wherein the engine 1 outputs power to the variable displacement hydraulic pump 4 via the first transmission shaft 6; and the motor generator 2 operates as a motor, discharges the battery 5, and outputs power to the variable displacement hydraulic pump 4 via the second transmission shaft 7; a regenerative drive mode, wherein the engine 1 outputs power to the variable displacement hydraulic pump 4 via the first transmission shaft 6 and the engine 1 outputs power to the motor generator 2 via the first transmission shaft 6, the first gear 8, the second gear 9, and the second transmission shaft 7, so as to cause the motor generator 2 to operate as a generator to charge the battery 5; and an engine drive mode, wherein the engine 1 outputs power to the variable displacement hydraulic pump 4 via the first transmission shaft 6; and the motor generator 2 stops outputting power.
Example 11: A method for controlling the hybrid power system according to any one of Examples 1 to 10, comprising: acquiring a demand rotational speed of the variable displacement hydraulic pump 4 as a target rotational speed of the engine 1; calculating an optimal efficiency torque of the engine 1 at the demand rotational speed as a target torque of the engine 1; acquiring a demand torque of the variable displacement hydraulic pump 4; and controlling a target torque of the motor generator 2 such that a sum of the target torque of the engine 1 and the target torque of the motor generator 2 is equal to the demand torque of the variable displacement hydraulic pump 4.
Example 12: The method according to Example 11, wherein the step of controlling the target torque of the motor generator 2 comprises: determining whether the target torque of the engine 1 is greater than the demand torque of the variable displacement hydraulic pump 4; in response to the target torque of the engine 1 being greater than the demand torque of the variable displacement hydraulic pump 4, controlling the engine 1 to output power to the variable displacement hydraulic pump 4 via the first transmission shaft 6, and output power to the motor generator 2 via the first transmission shaft 6, the first gear 8, the second gear 9, and the second transmission shaft 7, so as to cause the motor generator 2 to operate as a generator to charge the battery 5; and in response to the target torque of the engine 1 being less than the demand torque of the variable displacement hydraulic pump 4, controlling the engine 1 to output power to the variable displacement hydraulic pump 4 via the first transmission shaft 6, and controlling the motor generator 2 to operate as a motor to output power to the variable displacement hydraulic pump 4 via the second transmission shaft 7.
Example 13: The method according to Example 12, wherein controlling the motor generator 2 to operate as a motor to output power to the variable displacement hydraulic pump 4 via the second transmission shaft 7 comprises: determining whether a state of charge (SOC) of the battery 5 is not lower than a first threshold; in response to the SOC of the battery 5 being not lower than the first threshold, controlling the motor generator 2 to output power to the variable displacement hydraulic pump 4 via the second transmission shaft 7; and in response to the SOC of the battery 5 being lower than the first threshold, controlling the engine 1 to output power to the variable displacement hydraulic pump 4 via the first transmission shaft 6 such that an output torque of the engine 1 is equal to the demand torque of the variable displacement hydraulic pump 4; and controlling the motor generator 2 to stop outputting power.
Example 14: The method according to Example 12, wherein controlling the motor generator 2 to operate as a generator to charge the battery 5 comprises: determining whether a state of charge (SOC) of the battery 5 is higher than a second threshold; in response to the SOC of the battery 5 being higher than the second threshold, controlling the motor generator 2 to stop charging the battery 5; and in response to the SOC of the battery 5 being lower than the second threshold, controlling the engine 1 to output power to the motor generator 2 via the first transmission shaft 6, the first gear 8, the second gear 9, and the second transmission shaft 7, so as to cause the motor generator 2 to operate as a generator to charge the battery 5.
Example 15: The method according to Example 12, further comprising: monitoring whether a positive deviation between an output rotational speed of the engine 1 and the demand rotational speed of the variable displacement hydraulic pump 4 is greater than a third threshold; in response to the positive deviation between the output rotational speed of the engine 1 and the demand rotational speed of the variable displacement hydraulic pump 4 being greater than the third threshold and the target torque of the engine 1 being less than the demand torque of the variable displacement hydraulic pump 4, decreasing a positive output torque of the motor generator 2 to compensate for the positive deviation; and in response to the positive deviation between the output rotational speed of the engine 1 and the demand rotational speed of the variable displacement hydraulic pump 4 being greater than the third threshold and the target torque of the engine 1 being greater than the demand torque of the variable displacement hydraulic pump 4, increasing a negative output torque of the motor generator 2 to compensate for the positive deviation.
Example 16: The method according to Example 12, further comprising: monitoring whether an absolute value of a negative deviation between an output rotational speed of the engine 1 and the demand rotational speed of the variable displacement hydraulic pump 4 is greater than a fourth threshold; in response to the absolute value of the negative deviation between the output rotational speed of the engine 1 and the demand rotational speed of the variable displacement hydraulic pump 4 being greater than the fourth threshold and the target torque of the engine 1 being less than the demand torque of the variable displacement hydraulic pump 4, increasing a positive output torque of the motor generator 2 to compensate for the negative deviation; and in response to the absolute value of the negative deviation between the output rotational speed of the engine 1 and the demand rotational speed of the variable displacement hydraulic pump 4 being greater than the fourth threshold and the target torque of the engine 1 being greater than the demand torque of the variable displacement hydraulic pump 4, decreasing a negative output torque of the motor generator 2 to compensate for the negative deviation.
Example 17: The method according to Example 12, further comprising: monitoring whether a positive deviation between an output rotational speed of the engine 1 and the demand rotational speed of the variable displacement hydraulic pump 4 is greater than a fifth threshold; and in response to the positive deviation between the output rotational speed of the engine 1 and the demand rotational speed of the variable displacement hydraulic pump 4 being greater than the fifth threshold, controlling the motor generator 2 to reduce a rotational speed thereof or to stop operating.
Example 18: A computer system, comprising: a processing circuit; and a memory having computer-executable instructions stored thereon, wherein the computer-executable instructions, when executed by the processing circuit, implement the method according to any one of Examples 11-17.
Example 19: A computer program product, comprising computer-executable instructions, wherein the computer-executable instructions, when executed by a processing circuit, implement the method according to any one of Examples 11-17.
Example 20: A vehicle, wherein the vehicle comprises the hybrid power system according to any one of Examples 1-10.

The description of operational actions in any example aspect herein is provided for purposes of illustration and discussion. These actions may be performed by hardware components, may be implemented as machine-executable instructions to cause a processor to perform the actions, or may be performed by a combination of hardware and software. Although specific sequences of methodological actions are shown or described, the order of the actions may vary. Furthermore, two or more actions may be performed concurrently or in a partially overlapping manner.

It should be understood that the present disclosure is not limited to the aspects described above and shown in the accompanying drawings; rather, those skilled in the art will recognize that many changes and modifications may be made within the scope of the present disclosure and the appended claims. In the drawings and the specification, the disclosed aspects are provided for illustrative purposes only and not for purposes of limitation, and the scope of the present disclosure is set forth in the appended claims.

## Claims

1. A hybrid power system, comprising:
an engine (1), a motor generator (2), a gearbox (3), a variable displacement hydraulic pump (4), and a battery (5) electrically connected to the motor generator (2),
wherein the gearbox (3) comprises a first transmission shaft (6), a second transmission shaft (7), a first gear (8) disposed on the first transmission shaft (6), and a second gear (9) disposed on the second transmission shaft (7), wherein the first gear (8) is coupled to the second gear (9);
a rotation shaft of the motor generator (2) is coupled to one end of the second transmission shaft (7); and
the engine (1) is connected to the variable displacement hydraulic pump (4) via the first transmission shaft (6) through 1:1 transmission.

2. The hybrid power system according to claim 1, wherein the engine (1) being connected to the variable displacement hydraulic pump (4) via the first transmission shaft (6) through 1:1 transmission comprises:
the engine (1) being coupled to one end of the first transmission shaft (6), and the variable displacement hydraulic pump (4) being coupled to the other end of the first transmission shaft (6).

3. The hybrid power system according to claim 2, wherein the engine (1) being connected to the variable displacement hydraulic pump (4) via the first transmission shaft (6) through 1:1 transmission comprises:
the engine (1) being directly connected to one end of the first transmission shaft (6), and the variable displacement hydraulic pump (4) being directly connected to the other end of the first transmission shaft (6).

4. The hybrid power system according to claim 1, wherein the gearbox (3) further comprises a third transmission shaft (10) and a third gear (11) disposed on the third transmission shaft (10), wherein the first gear (8) is coupled to the second gear (9) via the third gear (11), and the third transmission shaft (10) is coupled to the variable displacement hydraulic pump (4).

5. The hybrid power system according to claim 4, wherein the engine (1) being connected to the variable displacement hydraulic pump (4) via the first transmission shaft (6) through 1:1 transmission comprises:
the engine (1) being connected to the variable displacement hydraulic pump (4) via the first transmission shaft (6), the first gear (8), the third gear (11), and the third transmission shaft (10) through 1:1 transmission.

6. The hybrid power system according to claim 1, wherein the first gear (8) is coupled to the second gear (9) via one or more intermediate gears.

7. The hybrid power system according to claim 1, wherein the hybrid power system is configured such that a sum of an output torque of the engine (1) and an output torque of the motor generator (2) that results from gear-ratio conversion by the second gear (9) is equal to a demand torque of the variable displacement hydraulic pump (4).

8. The hybrid power system according to claim 3, wherein the hybrid power system is configured such that when the output torque of the engine (1) is less than the demand torque of the variable displacement hydraulic pump (4), the motor generator (2) operates as a motor and an output torque thereof is a difference between the demand torque of the variable displacement hydraulic pump (4) and the output torque of the engine (1).

9. The hybrid power system according to claim 3, wherein the hybrid power system is configured such that when the output torque of the engine (1) is greater than the demand torque of the variable displacement hydraulic pump (4), the motor generator (2) operates as a generator and generates electricity under drive by the engine (1) to charge the battery (5).

10. The hybrid power system according to claim 1, wherein the hybrid power system is configured to operate in at least one of the following drive modes:
a dual drive mode, wherein the engine (1) outputs power to the variable displacement hydraulic pump (4) via the first transmission shaft (6); and the motor generator (2) operates as a motor, discharges the battery (5), and outputs power to the variable displacement hydraulic pump (4) via the second transmission shaft (7);
a regenerative drive mode, wherein the engine (1) outputs power to the variable displacement hydraulic pump (4) via the first transmission shaft (6) and the engine (1) outputs power to the motor generator (2) via the first transmission shaft (6), the first gear (8), the second gear (9), and the second transmission shaft (7), so as to cause the motor generator (2) to operate as a generator to charge the battery (5); and
an engine drive mode, wherein the engine (1) outputs power to the variable displacement hydraulic pump (4) via the first transmission shaft (6); and the motor generator (2) stops outputting power.

11. A method for controlling a hybrid power system according to any one of claims 1 to 10, comprising:
acquiring a demand rotational speed of the variable displacement hydraulic pump (4) as a target rotational speed of the engine (1);
calculating an optimal efficiency torque of the engine (1) at the demand rotational speed as a target torque of the engine (1);
acquiring a demand torque of the variable displacement hydraulic pump (4); and
controlling a target torque of the motor generator (2) such that a sum of the target torque of the engine (1) and the target torque of the motor generator (2) is equal to the demand torque of the variable displacement hydraulic pump (4).

12. The method according to claim 11, wherein the step of controlling the target torque of the motor generator (2) comprises:
determining whether the target torque of the engine (1) is greater than the demand torque of the variable displacement hydraulic pump (4);
in response to the target torque of the engine (1) being greater than the demand torque of the variable displacement hydraulic pump (4), controlling the engine (1) to output power to the variable displacement hydraulic pump (4) via the first transmission shaft (6), and output power to the motor generator (2) via the first transmission shaft (6), the first gear (8), the second gear (9), and the second transmission shaft (7), so as to cause the motor generator (2) to operate as a generator to charge the battery (5); and
in response to the target torque of the engine (1) being less than the demand torque of the variable displacement hydraulic pump (4), controlling the engine (1) to output power to the variable displacement hydraulic pump (4) via the first transmission shaft (6), and controlling the motor generator (2) to operate as a motor to output power to the variable displacement hydraulic pump (4) via the second transmission shaft (7).

13. The method according to claim 12, wherein controlling the motor generator (2) to operate as a motor to output power to the variable displacement hydraulic pump (4) via the second transmission shaft (7) comprises:
determining whether a state of charge (SOC) of the battery (5) is not lower than a first threshold;
in response to the SOC of the battery (5) being not lower than the first threshold, controlling the motor generator (2) to output power to the variable displacement hydraulic pump (4) via the second transmission shaft (7); and
in response to the SOC of the battery (5) being lower than the first threshold, controlling the engine (1) to output power to the variable displacement hydraulic pump (4) via the first transmission shaft (6) such that an output torque of the engine (1) is equal to the demand torque of the variable displacement hydraulic pump (4); and controlling the motor generator (2) to stop outputting power.

14. The method according to claim 12, wherein controlling the motor generator (2) to operate as a generator to charge the battery (5) comprises:
determining whether a state of charge (SOC) of the battery (5) is higher than a second threshold;
in response to the SOC of the battery (5) being higher than the second threshold, controlling the motor generator (2) to stop charging the battery (5); and
in response to the SOC of the battery (5) being lower than the second threshold, controlling the engine (1) to output power to the motor generator (2) via the first transmission shaft (6), the first gear (8), the second gear (9), and the second transmission shaft (7), so as to cause the motor generator (2) to operate as a generator to charge the battery (5).

15. The method according to claim 12, further comprising:
monitoring whether a positive deviation between an output rotational speed of the engine (1) and the demand rotational speed of the variable displacement hydraulic pump (4) is greater than a third threshold;
in response to the positive deviation between the output rotational speed of the engine (1) and the demand rotational speed of the variable displacement hydraulic pump (4) being greater than the third threshold and the target torque of the engine (1) being less than the demand torque of the variable displacement hydraulic pump (4), decreasing a positive output torque of the motor generator (2) to compensate for the positive deviation; and
in response to the positive deviation between the output rotational speed of the engine (1) and the demand rotational speed of the variable displacement hydraulic pump (4) being greater than the third threshold and the target torque of the engine (1) being greater than the demand torque of the variable displacement hydraulic pump (4), increasing a negative output torque of the motor generator (2) to compensate for the positive deviation.

16. The method according to claim 12, further comprising:
monitoring whether an absolute value of a negative deviation between an output rotational speed of the engine (1) and the demand rotational speed of the variable displacement hydraulic pump (4) is greater than a fourth threshold;
in response to the absolute value of the negative deviation between the output rotational speed of the engine (1) and the demand rotational speed of the variable displacement hydraulic pump (4) being greater than the fourth threshold and the target torque of the engine (1) being less than the demand torque of the variable displacement hydraulic pump (4), increasing a positive output torque of the motor generator (2) to compensate for the negative deviation; and
in response to the absolute value of the negative deviation between the output rotational speed of the engine (1) and the demand rotational speed of the variable displacement hydraulic pump (4) being greater than the fourth threshold and the target torque of the engine (1) being greater than the demand torque of the variable displacement hydraulic pump (4), decreasing a negative output torque of the motor generator (2) to compensate for the negative deviation.

17. The method according to claim 12, further comprising:
monitoring whether a positive deviation between an output rotational speed of the engine (1) and the demand rotational speed of the variable displacement hydraulic pump (4) is greater than a fifth threshold; and
in response to the positive deviation between the output rotational speed of the engine (1) and the demand rotational speed of the variable displacement hydraulic pump (4) being greater than the fifth threshold, controlling the motor generator (2) to reduce a rotational speed thereof or to stop operating.

18. A computer system, comprising:
a processing circuit; and
a memory having computer-executable instructions stored thereon, wherein the computer-executable instructions, when executed by the processing circuit, implement the method according to any one of claims 11-17.

19. A computer program product, comprising computer-executable instructions, wherein the computer-executable instructions, when executed by a processing circuit, implement the method according to any one of claims 11-17.

20. A vehicle, comprising the hybrid power system according to any one of claims 1-10.
